# EUROPEAN PATENT APPLICATION

(11) **EP 2 078 550 A1**
(43) Date of publication of application: **15.07.2009**
(21) Application number: 08173131.7
(22) Date of filing: 31.12.2008
(51) Int. Cl.: A63H 29/10, A63H 27/00, A63H 30/04

(54) **Hovercraft toy**

(30) Priority: 11.01.2008 JP 2008004585
(71) Applicant: Tomy Company, Ltd., Tokyo 124-8511 (JP)
(72) Inventor: Ichikawa, Takashi, Tochigi Tochigi 328-0042 (JP)
(74) Representative: Bailey, David Martin

(57) **Abstract**

Disclosed is a hovercraft toy including: a body (10), which includes, a fan (12) for sending air in order to allow the body to hover and propel; a motor (15) for rotationally driving the fan; an accumulator battery (16) for supplying electric power to the motor; a base (11) for supporting the fan, the motor and the battery at a top thereof; and a skirt (14) arranged on a peripheral part of a bottom part of the base and formed in a shape of bag to be expandable and contractable, wherein the base includes an input terminal (161) on an under surface thereof, the terminal being connectable to an external power source for charging the battery, and the skirt is formed to have an opening (141) on an under surface thereof so as to allow the input terminal to be exposed downwardly.

## Description

Heretofore, a vehicle that hovers and propels by using lifting power of an air-cushion sealed between a bottom surface of a body and a solid surface or a liquid surface is referred to as a hovercraft toy or an air-cushion vehicle. A hovercraft toy such as disclosed in, for example, Japanese Patent Application Laid-Open publication No.2005-73986 is known as a running toy representing the vehicle.

Meanwhile, stable hovering is needed to achieve smooth running of the hovercraft toy, and weight saving of the body is needed to achieve the stable hovering. Therefore, lightweight materials such as resin or the like is adopted as a construction material of the body. Moreover, an accumulator battery, not a primary battery such as dry batteries, is adopted as a power source to be mounted on the body, for the reason that the accumulator battery is capable of weight saving. Then, a charging terminal of the accumulator battery is provided on an upper surface of the body so as to be easy to connect with a battery charger.

However, in the hovercraft toy disclosed in the Japanese Patent Application Laid-Open publication No.2005-73986, the weight saving of the body causes strength reduction of the body. Consequently, if an adjacent portion of the charging terminal is grasped hardly so that the charging terminal being connected with the battery charger, when charging the accumulator battery mounted on the body, the portion may be distorted in shape or damaged.

The present invention seeks to overcome such a problem. The present invention seeks to provide a hovercraft toy capable of saving weight of the body and preventing the body from being distorted or damaged when charging the battery.

According to one aspect of the present invention, there is provided a hovercraft toy including: a body, which includes, a fan for sending air in order to allow the body to hover and propel; a motor for rotationally driving the fan; an accumulator battery for supplying electric power to the motor; a base for supporting the fan, the motor and the battery at a top thereof; and a skirt arranged on a peripheral part of a bottom part of the base and formed in a shape of bag to be expandable and contractable, wherein the base includes an input terminal on an under surface thereof, the terminal being connectable to an external power source for charging the battery, and the skirt is formed to have an opening on an under surface thereof so as to allow the input terminal to be exposed downwardly.

Preferably, the hovercraft toy further includes a battery charger as the external power source provided separately from the body, the battery charger including an output terminal for charging the battery when the output terminal is touched to the input terminal, wherein the output terminal is provided on an upper surface of the battery charger on which a bottom face of the body is to be placed.

Preferably, the battery charger includes a concave portion to be fit to the periphery part of the bottom part of the body, and the output terminal is formed to be touched to the input terminal when the body is fit to the concave portion.

Preferably, the battery charger is a remote controller for remote controlling the body.

Preferably, each of the input terminal and the output terminal is composed of a magnet so that a magnetic attractive force interacts therebetween.

Preferably, the accumulator battery includes a lithium polymer battery or a gold capacitor.

Preferably, the fan is composed of an ABS resin; the base is composed of a plastic material; and the skirt is composed of a polyvinyl resin.

According to a second aspect of the present invention, there is provided a hovercraft toy including: a body, which includes, a fan for sending air in order to allow the body to hover and propel; a motor for rotationally driving the fan; an accumulator battery for supplying electric power to the motor; a base for supporting the fan, the motor and the battery at a top thereof; and a skirt arranged on a peripheral part of a bottom part of the base and formed in a shape of bag to be expandable and contractable, wherein the base includes an input terminal on an under surface thereof, the terminal being connectable to an external power source for charging the battery, and the skirt is formed to have an opening on an under surface thereof so as to allow the input terminal to be exposed downwardly. Therefore, the body can be formed light in weight. Moreover, the base includes an input terminal on an under surface thereof, the terminal being connectable to an external power source for charging the battery, and the skirt is formed to have an opening on an under surface side thereof so as to allow the input terminal to be exposed downwardly. Therefore, an adjacent portion of the input terminal need not be grasped hardly when charging the battery, and a distortion or damage of a grasp portion can be prevented.

Moreover, the external power source is a battery charger provided separately from the body, including an output terminal for charging the battery by being touched to the input terminal, and provided on a surface on which a bottom face of the body is to be placed. Therefore, the accumulator battery can be charged by the body being placed on a surface, on which a bottom face of the body is to be placed, to allow the input terminal connected with the output terminal. Consequently, an adjacent portion of the input terminal need not be grasped hardly when charging the battery, and a distortion or damage of a grasp portion can be prevented.

Moreover, the battery charger includes a concave portion to be fit to the periphery part of the bottom part of the body, the concave portion has the surface at a bottom part thereof, and the output terminal is formed to be touched to the input terminal when the body is fit to the concave portion. Therefore, the accumulator battery can be charged only by the body being placed on a surface, on which a bottom face of the body is to be placed, to allow the input terminal connected with the output terminal.

Moreover, each of the input terminal and the output terminal is composed of a magnet so that a magnetic attractive force interacts therebetween. Therefore, charging of the battery can be executed stably without departing the terminals from each other while charging the battery, and the connection between the terminals can be acknowledged by a user by feeling the attraction force thereof, without visually checking the connection thereof.

Moreover, the accumulator battery includes a lithium polymer battery or a gold capacitor. Therefore, the body can be formed lighter in weight.

Moreover, the fan is composed of an ABS resin; the base is composed of a plastic material; and the skirt is composed of a polyvinyl resin. Therefore, the body can be formed lighter in weight.

The above and other objects, advantage and features of the present invention will become more fully understood from the detailed description given hereinbelow and the appended drawings which are given by way of illustration only, and thus are not intended as a definition of the limits of the present invention, and wherein:
FIG. 1 is a side sectional view of a body according to an embodiment of the present invention;
FIG. 2A is a front view of a remote controller according to an embodiment of the present invention with an open/close panel closed;
FIG. 2B is a front view of a remote controller according to an embodiment of the present invention with an open/close panel opened;
FIG. 3 is a top sectional view showing a rotational structure of rudder provided on the body shown in FIG. 1;
FIG. 4 is a block diagram showing a circuit structure of the body;
FIG. 5 is a block diagram showing a circuit structure of the remote controller;
FIG. 6 is an external view showing a state of the body placed on the remote controller; and
FIG. 7 is a sectional view showing a hovering state of the body.

In the following, a hovercraft toy according to an embodiment of the present invention will be described with reference to the attached drawings.

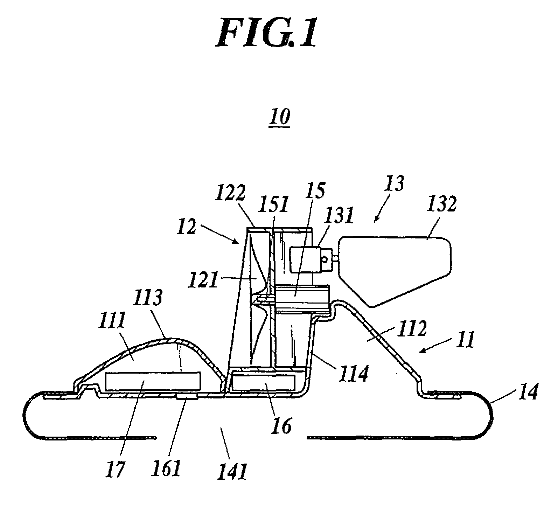

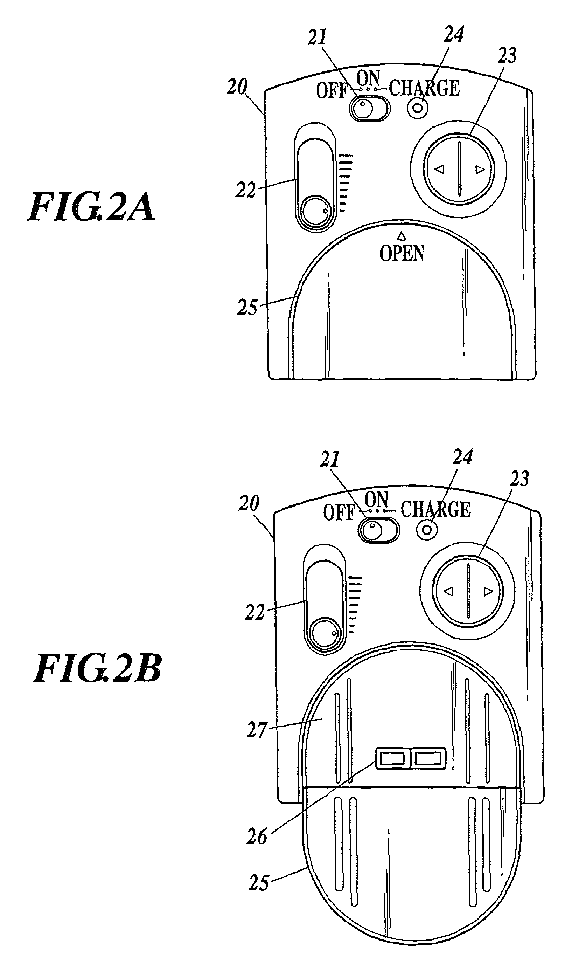

A hovercraft toy 1 according to an embodiment of the present invention includes a body 10 shown in Fig. 1, and a remote controller 20 shown in Fig. 2. The hovercraft toy 1 is a toy for enjoying that the body 10 remotely controlled by the remote controller 20 to freely sail on a solid surface.

A structure of the body 1 will firstly be explained with reference to Figs. 1, 3 and 4.
As shown in Fig. 1, the body 1 includes a base 11, a fan 12 for hovering and propelling arranged on top of the base 11, a rudder for steering 13 arranged behind the fan 12 (on the right side of Fig. 1), a skirt 14 provided on a periphery of a bottom part of the base 11, a motor 15 for driving the fan 12, a battery 16 for supplying electric power to the rudder 13 and the motor 15, and a receiver 17 for receiving radio signal from the remote controller 20 in order to control a motion of the rudder 13 and the motor 15.

The base 11 includes a storage space 111 on front side of an upper portion of the body 1 and a ventilation space 112 on rear side of the upper portion of the body 1. A bottom face of the base 11 is formed smoothly and nearly in the shape of ellipse. The base 11 is composed of a plastic material including such as, but is not limited to, a polyethylene terephthalate (PET) resin or a styrol resin or the like so as to be light in weight. The storage space 111 stores the receiver 17 therein, and an upper portion thereof is covered by a removable cover 113. The ventilation space 112 includes an air intake opening 114 on front portion thereof (on the left side of Fig. 1) for communicably connecting an exterior space and an interior space thereof. An under side of the ventilation space 112 is open in order that the air introduced through the air intake opening 114 into the interior space to be send into the skirt 14.
The fan 12 includes fan blades 121 fixed to a rotating shaft 151 of the motor 15 and a fan housing 122 for supporting the motor 15. The fan 12 is allocated in between the storage space 151 and the ventilation space 112 of the base 11. Lower half part of the fan blade 121 below the rotating shaft 151 is set nearly to face the air intake opening 114 of the ventilation space 112. Moreover, both the fan blade 121 and the fan housing 122 are composed of, but are not limited to, an ABS resin.

The rudder 13 includes a rudder driving section 131 fixed to a rear side of the fan housing 122 and a rudder blade 132 supported by the rudder driving section 131 swingably in a lateral direction. The rudder 13 is allocated above the ventilation space 112 of the base 11, and is arranged so that the rudder blade 132 is set almost the same height as an upper half part of the fan blade 121 above the rotating shaft 151. Incidentally, the rudder blade 132 is composed of, but is not limited to, a plastic materials such as styrol resin or the like to be light in weight.

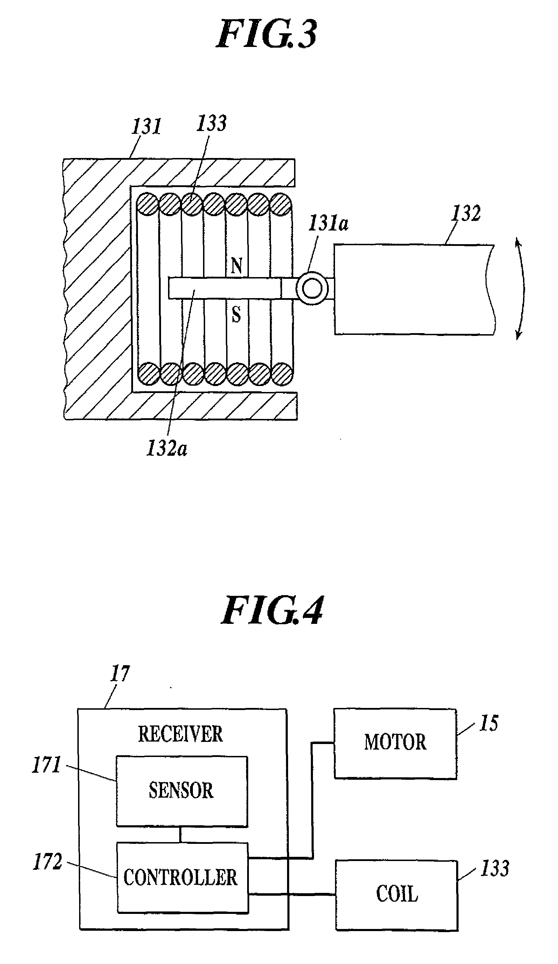

Moreover, as shown in Fig. 3, one end portion of the rudder blade 132 of the rudder 13 is supported rotatably in a lateral direction around a rotation axis 131a, which is fixed to the rudder driving section 131. The other end portion of the rudder blade 132 is inserted in a coil 133 for driving the rudder 13, wherein the coil 133 is located on the rudder driving section 131 and an electric current is allowed to flow into the coil 133 from the battery 16. A permanent magnet 132a is located on a root portion (the other end portion) of the rudder blade 132, the portion is to be inserted in the coil 133. In this case, the permanent magnet 132a is arranged so that one of an N pole and an S pole faces to one of a right side and a left side of the body 10, and the other of the S pole and the N pole faces to the other side of the body 10. Then, the rudder blade 132 rotates to a right or left direction by magnetic attractive force or repelling force generated according to a direction of an electric current, when the electric current flows into the coil 133.

Incidentally, on condition that the electric current does not flow into the coil 133, the rudder 132 is in a state of free, but is not limited thereto. As a matter of course, a biasing member such as a spring or the like may be arranged so that the rudder blade 132 may be held in a neutral position. Moreover, coils may be arranged in both right and left side of the permanent magnet 132a, respectively, to rotate the rudder blade 132. A coil may be arranged on the rudder blade 132 with opposite poles of permanent magnets being arranged in right and left side of the coil, respectively, to face thereto.

As shown in Fig. 1, the skirt 14 is arranged along a peripheral part of a bottom part of the base 11. The skirt 14 covers around the periphery of the bottom part of the base 11, and has an opening 141 in almost a center of a bottom thereof. The skirt 14 is composed of, but is not limited to, a thin sheet such as a vinyl resin or the like to be expandable and contractable. According to the configuration, the skirt is configured to be capable of being expanded in a shape of bag along the peripheral part of a bottom part of the base 11 by an air send through the air intake opening 114 to the bottom side thereof, and the skirt 14 can make the body 10 hover in well-balanced state by discharging the air downwardly through the opening 141.

The motor 15 is installed in the fan housing 122 of the fan 12, and the fan blade 121 is fixed to the rotating shaft 151 of the motor 15. An electric power is supplied to the motor 15 from the battery 16, and the motor 15 is controlled by the receiver 17 so as to rotate the fan blade 121.

The battery 16 is stored in a space between a bottom surface of the fan housing 122 and a top surface of the base 11, and supplies electric power to the coil 133 of the rudder 13 and to the motor 15. A lithium polymer battery or a gold capacitor, which are light in weight, is applied, but not limited thereto, as the battery 16.
Moreover, the battery 16 separately has an input terminal 161 to be touched, when charging, to an output terminal 26 described below. The input terminal 161 is allocated in rather front side position of the center of the bottom of the base 11, and is connected with the battery 16 through an electrically connectable cable (not shown). Moreover, the input terminal 161 is downwardly exposed through the opening 141 of the skirt 14. In this manner, an adjacent portion of the input terminal 161 need not be grasped hardly when charging the battery 16, and a distortion or damage of a grasp portion can be prevented.

The receiver 17 is stored in the storage space 111 and, as shown in Fig. 4, includes a sensor 171 and a controller 172. The sensor 171 receives a control signal from a transmitter 203 of the remote controller 20 described below. The controller 172 controls revolution drive of the motor 15 and an energization to the coil 133 of the rudder 13 according to control data accompanying the control signal received by the sensor 171.

Next, a structure of the remote controller 20 will be described with reference to Figs. 2A, 2B, 5 and 6.

The remote controller 20 is, as shown in Fig. 2A, formed in almost a square shape seen from the front thereof, and includes a power switch 21, speed switch 22, steering button 23 and a status lamp 24 on a surface thereof. Among the above, the power switch 21 is configured to be able to be switched to an ON/OFF state of power supply and to a charging mode for charging the battery 16 of the body 10.

The speed switch 22 is a switch for shifting a propellant speed of the body 10 in multiple stages, and is configured that the more upwardly in Fig. 2A the switch 22 is shifted, the more faster the rotating speed of the fan blade 121 becomes so as to increase propelling speed of the body 10. However, if the speed switch 22 is set to a minimum speed, the body only hovers slightly but not propels. Moreover, when shifting the power switch 21 from OFF to ON to start up the body 10, the body 10 can not start moving without shifting the speed switch 22 to be set to the minimum speed. This led the body 10 not to start moving with the skirt 14 being contracted so as to prevent the skirt 14 from being damaged.

The steering button 23 is a button for changing traveling direction of the body 10, and is configured so that the rudder 13 rotates to each direction according to strength of pushing each of the right and left buttons. The status lamp 24 glows blue when the power is ON and turns off when the power is OFF, but not limited thereto. Moreover, the status lamp 24 glows green when the power switch 21 is set to the charging mode and is configured to be changed to blink on and off when charging for the battery 16 has completed.

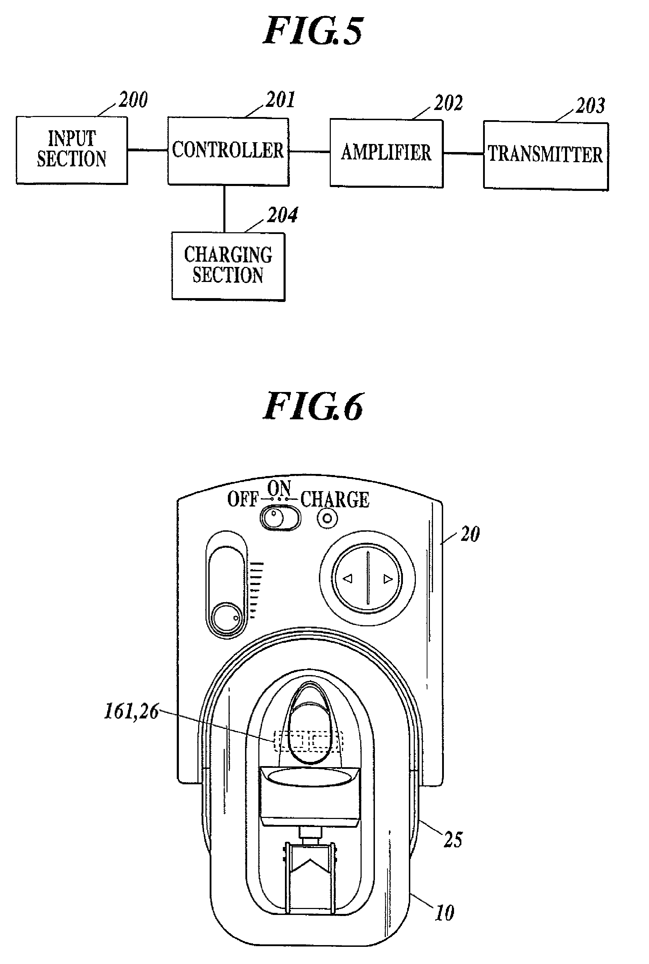

Moreover, the remote controller 20 includes an open/close panel 25 in the shape of semicircle on the lower side of the buttons on the surface thereof. The open/close panel 25 is arranged rotatably along a lower hem of the surface of the remote controller 20. When the open/close panel 25 is opened, as shown in Fig. 2B, a surface 27 including the output terminal 26 arranged at almost a center thereof is exposed. The rotation of the open/close panel 25 is regulated at where the panel 25 is opened 180-degree, so that a rear surface of the open/close panel 25 and the surface 27 form an almost the same plane when the panel 25 is opened 180-degree. Moreover, the surface 27 is reentrant compared to the surface of the remote controller 20 and a planar figure thereof is formed to be almost the same figure of the leading edge of the body 10. As a result of such configuration as described above, the body 10, as shown in Fig. 6, can be placed on a plane surface formed of the rear surface of the open/close surface 25 and the surface 27 so that the leading edge thereof is fit to an edge between the surface 27 and the surface of the remote controller 20. In this moment, the output terminal 26 touches the input terminal 161 of the body 10.

Incidentally, it is preferable that the output terminal 26 and the input terminal 161 are composed of magnets each of them exerts a magnetic attractive force with each other. This will lead charging of the battery can be executed stably without departing the terminals from each other while charging the battery, and the connection between the terminals can be acknowledged by a user by feeling the attraction force thereof, without visually checking the connection thereof.

Here, a circuit configuration of the remote controller 20 will be explained. The remote controller 20 includes, as shown in Fig. 5, an inputting section 200, a controller 201, an amplifier 202, a transmitter 203 and a charging section 204. Operating information may be input into the inputting section 200 by operating the speed switch 22 and the steering button 23. The inputting operation can be executed only when the power switch 21 is ON. The controller 201 generates control data on the basis of the operating information input into the inputting section 200, and transmits a control signal including the control data from the transmitter 203 to the receiver 17 of the body 10 through the amplifier 202. The charging section 204 is a section for charging the body 10 through the output terminal 26, wherein the charging section 204 executes an energization from a battery (not shown) as a power source incorporated in the remote controller 20 to the output terminal 26. However, the energization is executed only when the power switch 21 is shifted to the charging mode.

Next, a movement of the hovercraft toy 1 will be explained.

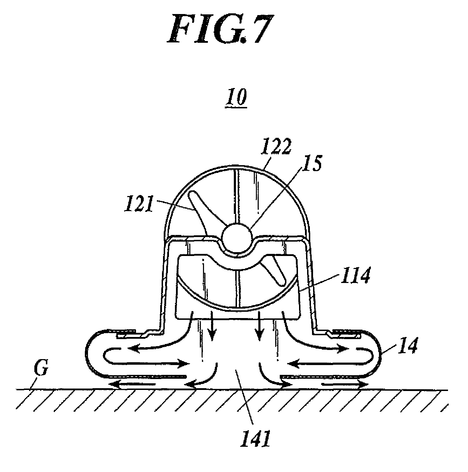

First of all, place the body 10 on a ground surface G, shift the speed switch 22 to the minimum speed and turn the power switch 21 to be ON. Then, the controller 201 generates control data for rotating the fan blade 121 at a minimum speed and sends the control signal including the control data from the transmitter 203 to the body 10. When the sensor 171 of the receiver 17 receives the control signal, the controller 172 causes the fan blade 121 to be rotated on the basis of the control data included in the control signal. By rotation of the fan blade 121, as shown in Fig. 7, the air blown by rather lower half part of the fan blade 121 is send to the air intake opening 114 as for hovering, and the air blown by rather upper half part of the fan blade 121 is send to the rudder blade 132 as for propelling. Among the airs, as shown in Fig. 7, the air for hovering expands the skirt 14 through the air intake opening 114, and blows to an external space through the bottom of the skirt 14 so that the body 10 slightly hovers. On this occasion, although the air for propelling attempts to start moving the body 10, the body 10 keeps stopping by stiction between the bottom surface of the skirt 14 and the ground surface G, because the surfacing is not completed and the propelling power is weak.

Next, when propelling the body 10, shift the speed switch 22 of the remote controller 20 to a high-speed side with the body 10 in a state of hovering. Then, the control signal including the control data according to a setting of the speed switch 22 is transmitted from the transmitter 203 of the remote controller 20 to be received by the sensor 171 of the body 10. Then, the controller 172 causes the motor 15 to accelerate the fan blade 121 on the basis of the control data included in the control signal. Thus, the air send from the accelerated fan blade 121 causes the body 10 to hover and to propel to a direction according to a direction of the rudder 13.

Next, when changing the traveling direction of the body 10, operate the steering button 23 of the remote controller 20 with the body hovering and propelling. If any right or left steering button 23 is held down, the controller 201 generates control data for rotating the rudder 13 according to strength of the thrust, and the control signal including the control data is transmitted from the transmitter 203 to the body 10. When the sensor 171 of the receiver 17 receives the control signal, the controller 172 energizes the coil 133 of the rudder 13 on the basis of the control data included in the control signal. Then, the rudder blade 132 rotates to a right or left predetermined direction on the basis of the current direction and an amount of the current at the moment.

Next, a motion of the hovercraft toy 1 when charging the battery 16 of the body 10 will be explained.

First of all, open the open/close panel 25 of the remote controller 20 and shift the power switch 21 to a charging mode. By this switching, the remote controller 20 is shifted to a state that the energization from the battery incorporated in the remote controller 20 to the output terminal 26 is available by the charging section 204. In this state, as shown in Fig. 6, place the body 10 on a plane formed of the rear surface of the open/close panel 25 and the surface 27 so that a leading edge of the body 10 to be fit to an edge between the surface 27 and the surface of the remote controller 20. Then, the input terminal 161 of the body 10 and the output terminal 26 of the remote controller 20 are touched with each other so that the charging is executed. Incidentally, the status lamp 24 of the remote controller 20 glows green while charging the battery 16, and is changed to turn on and off green light after having completed the charging.

As described above, the battery 16 can be charged by only placing the body 10 on a plane formed of the surface 27 and a rear surface of the open/close panel 25 so that a leading edge of the body 10 to be fit to an edge between the surface 27 and the surface of the remote controller 20. Moreover, when the body 10 is placed on the plane formed of the surface 27 and a rear surface of the open/close panel 25, the body 10 can be lifted by grasping the fan housing 122. Consequently, an adjacent portion of the input terminal does not need to be grasped hardly.

As described above, according to the hovercraft toy 1, the body 10 can be formed to be light in weight. Moreover, an adjacent portion of the input terminal 161 need not be grasped hardly when charging the battery 16, and a distortion or damage of a grasp portion can be prevented, by the input terminal 161 being exposed downwardly.

Incidentally, although the charging to the battery 16 is executed through the remote controller 20 in this embodiment, a battery charger separated from the remote controller 20 may be applied as an alternative to the remote controller 20. Moreover, the remote controller 20 does not limited to be formed so that the leading edge of the body 10 to be fit to an edge between the surface 27 and the surface of the remote controller 20 when the open/close panel 25 is opened.

## Claims

1. A hovercraft toy comprising:
a body, which includes,
a fan for sending air in order to allow the body to hover and propel;
a motor for rotationally driving the fan;
an accumulator battery for supplying electric power to the motor;
a base for supporting the fan, the motor and the battery at a top thereof; and
a skirt arranged on a peripheral part of a bottom part of the base and formed in a shape of bag to be expandable and contractable,
wherein the base includes an input terminal on an under surface thereof, the terminal being connectable to an external power source for charging the battery, and
wherein the skirt is formed to have an opening on an under surface thereof so as to allow the input terminal to be exposed downwardly.

2. A hovercraft toy as claimed in claim 1, further comprising; a battery charger as the external power source provided separately from the body, the battery charger including an output terminal for charging the battery when the output terminal is touched to the input terminal, wherein the output terminal is provided on an upper surface of the battery charger on which a bottom face of the body is to be placed.

3. A hovercraft toy as claimed in claim 2, wherein the battery charger includes a concave portion to be fit to the periphery part of the bottom part of the body, and the output terminal is formed to be touched to the input terminal when the body is fit to the concave portion.

4. A hovercraft toy as claimed in claim 2 or claim 3, wherein the battery charger is a remote controller for remote controlling the body.

5. A hovercraft toy as claimed in any one of claims 2-4, wherein each of the input terminal and the output terminal is composed of a magnet so that a magnetic attractive force interacts therebetween.

6. A hovercraft toy as claimed in any one of claims 1-5, wherein the accumulator battery includes a lithium polymer battery or a gold capacitor.

7. A hovercraft toy as claimed in any one of claims 1-6, wherein the fan is composed of an ABS resin; the base is composed of a plastic material; and the skirt is composed of a polyvinyl resin.
